# EUROPEAN PATENT SPECIFICATION

(11) **EP 2 605 633 B1**
(45) Date of publication and mention of the grant of the patent: **25.04.2018**
(21) Application number: 11745756.4
(22) Date of filing: 11.08.2011
(51) Int. Cl.: A01D 41/12, A01D 43/08, A01D 75/20, A01F 29/18, B60R 3/00, B62D 25/10, B62D 25/12, E05D 3/14, E05D 11/10

(54) **PANEL ARRANGEMENT FOR A HARVESTING MACHINE**
PLATTENANORDNUNG FÜR EINE ERNTEMASCHINE
AGENCEMENT DE PANNEAUX DESTINÉ À UNE MACHINE DE RÉCOLTE

(30) Priority: 20.08.2010 GB 201013955
(43) Date of publication of application: 26.06.2013
(73) Proprietor: AGCO International GmbH, 8212 Neuhausen am Rheinfall (CH)
(72) Inventor: SCHANZ, Stefan, 87671 Ronsberg (DE); ALAPIC, Igor, 89281 Altenstadt (DE)
(74) Representative: AGCO Intellectual Property Department
(86) International application number: PCT/EP2011/063820
(87) International publication number: WO 2012/022666

(56) References cited:
- EP-A1- 1 387 230
- EP-A1- 2 216 238
- US-A- 4 545 719
- US-A- 4 613 155
- US-A- 4 630 431
- US-A1- 2009 145 692

## Description

This invention concerns movable exterior panels on a harvesting machine. More specifically, the invention concerns movable side panels on a self propelled harvesting machine.

Typically, self propelled harvesting machines are provided with movable exterior panels to ensure access to machine parts, such as the motor, gears, and belt drive which are housed within the panels on the harvester. The machine parts are usually mounted on the floor, or chassis of the harvesting machine. A horizontal walkway such as a grid, or roof is usually provided on the top of the machine providing protection above the machine parts and provides a platform to access components on top of the vehicle, for example the oil filter and cooling water. Movable panels are fitted to opposing sides of the machine and extend from the walkway down to the floor, or chassis providing protection along the sides of the machine.

The side panels are usually mounted to the machine by hinge means so that they can pivot about a horizontal axis. The panels can be pivoted outwards away from the machine, like wings, into an open position to provide access to the machine parts housed within the panels. The machine parts can therefore not be accessed if the space around the machine is restricted since the panels require space to be moved into the open position. Typically, the panels can be pivoted into an open position in which the surfaces of the panels lie in a plane approximately at right angles to the plane of the panels in the closed position. That is the panels move from a substantially vertical plane in the closed position to a substantially horizontal position in the open position. Access to the machine parts may be restricted, or hindered by the position of an opened panel given that the panel has limited movement.

Machine parts and machine components can also be accessed from above from the walkway which is located approximately three metres above the ground. A handrail may be mounted to the spout of the machine, however there is a danger of an operator falling from the walkway since the edges of the walkway are unguarded.

US2009/0145692 discloses a combine harvester having a chassis with vertical side walls which can be pivoted outwards to provide access to machine parts within the machine. A rear access ladder is provided which can be deployed to provide access to a rear platform which is provided with handrails to prevent an operator from falling.

EP2216238 discloses a tracked operating machine for excavating ground or drilling rock walls. The machine comprises a cab and machine parts on one side and further machine parts on another side. A gully is positioned in between in which an arm is provided for supporting a work tool. Each side of the machine has an external wall which comprises two panels. One panel opens outwards and one panel can be moved vertically to provide access to the machine parts. The panel which opens outwards provides a horizontal gangway for an operator to stand upon and inspect the machine parts underneath the other panel.

EP 1387 130 A1 dislcoses a self-propelled forage harvester according to the preamble of claim 1.

It as an object of the present invention to provide an alternative exterior panel arrangement on a harvesting machine to improve access to machine parts on the machine. It is a further object of the invention to improve the safety of the walkway on a harvesting machine.

According to the invention there is provided self-propelled forage harvester having a central, elevated walkway extending in a longitudinal direction along the machine above machine parts situated below on a floor of the machine, said machine having at least two opposing exterior side panels, each of side panels movable between a closed position in which each panel extends in a substantially vertical plane between the walkway and the floor of the machine providing protection to a side of the machine, and an open position wherein each panel in a raised position extends in a substantially vertical plane providing access underneath the panel to the machine parts and wherein at least a portion of each panel projects above the walkway providing a safety barrier along two edges of the walkway.

Preferred features of the invention are set out in the dependent claims.

The invention will now be described, by way of example only, with reference to the following drawings in which:
Figure 1 is a side view of a forage harvester from the right hand side,
Figure 2 is a side view of a forage harvester from the right hand side showing the panel arrangement in accordance with the invention,
Figure 3 is a side view of a forage harvester from the left hand side,
Figure 4 is a side view of a forage harvester from the left hand side showing the panel arrangement in accordance with the invention,
Figure 5 is rear view of a forage harvester showing the panel arrangement in a closed position in accordance with the invention,
Figure 6 is a rear view of a forage harvester showing the panel arrangement in an open position in accordance with the invention,
Figures 7a, 7b, 7c are perspective views of one of the panels in accordance with the invention, and
Figures 8, 9 and 10 are perspective views of the mechanism used for attaching the panels to the harvester in accordance with the invention.

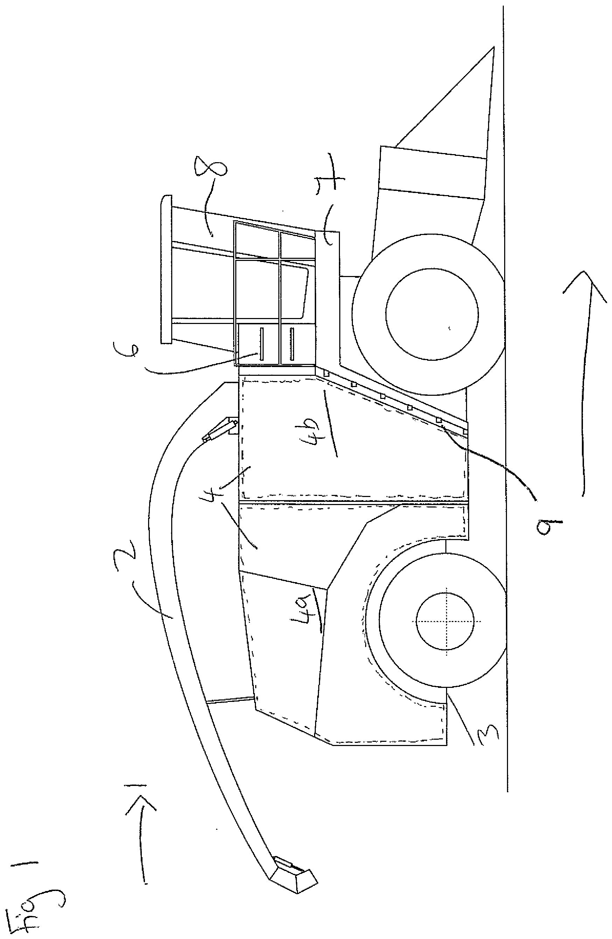

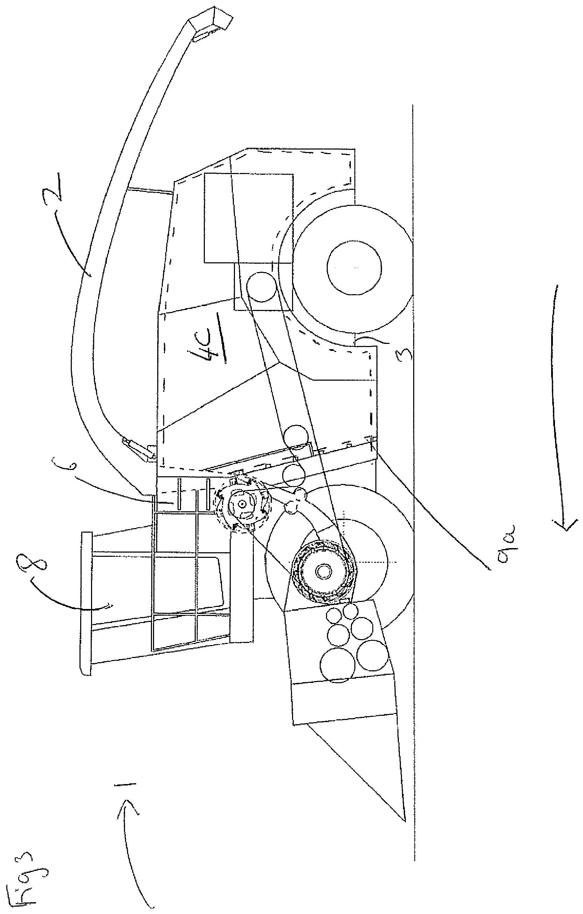

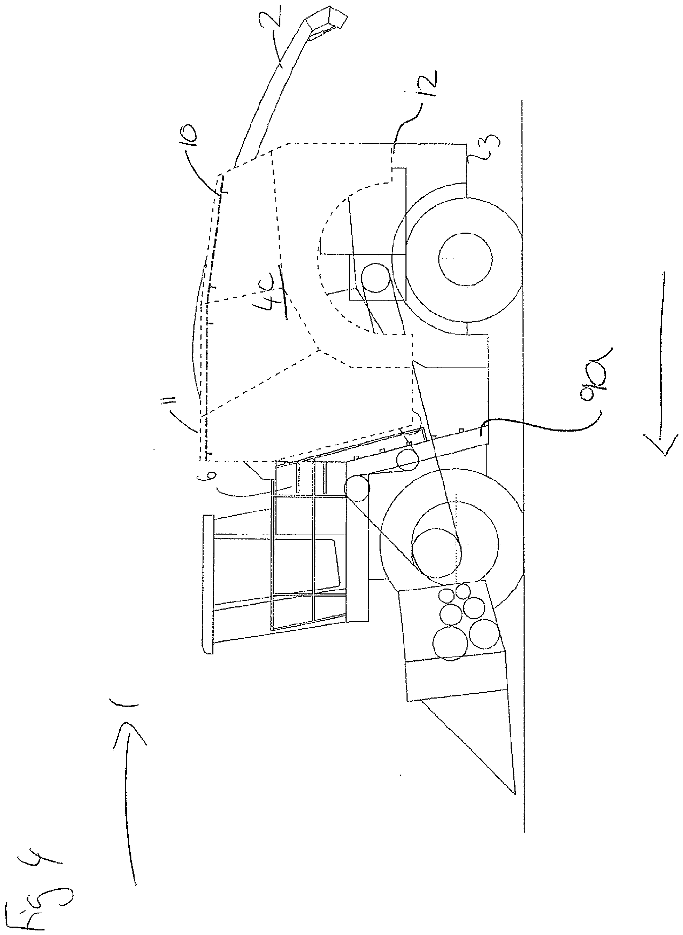

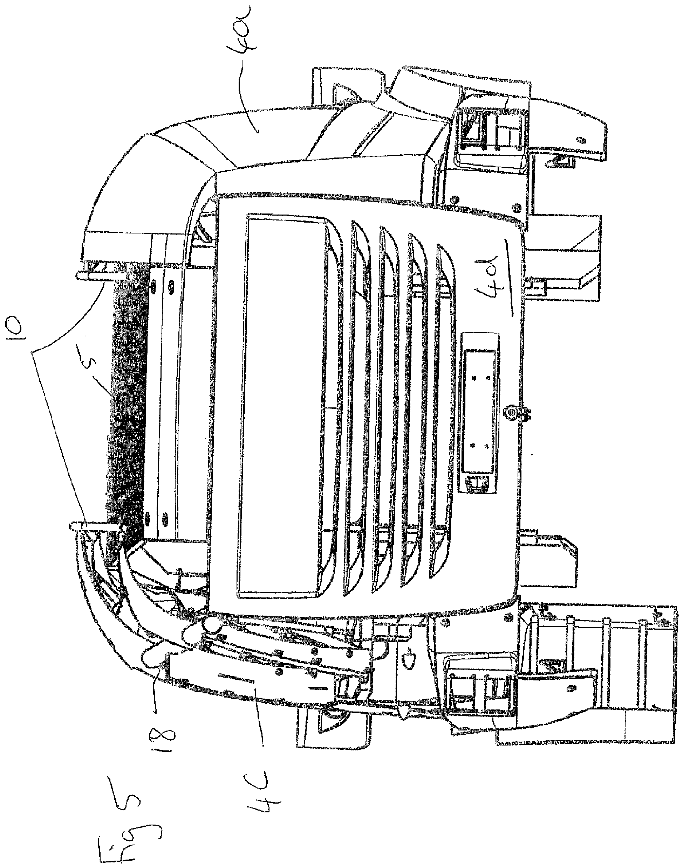

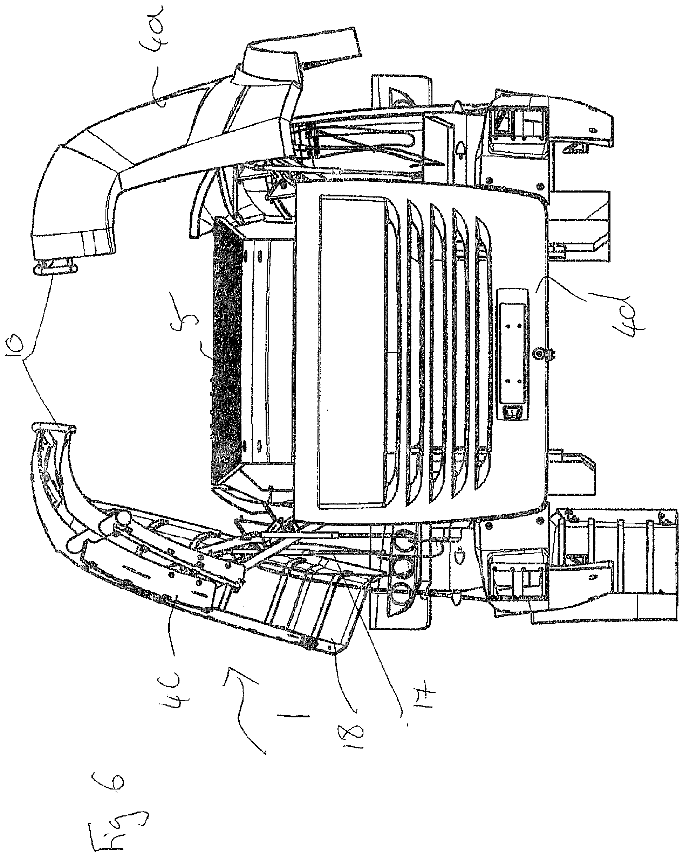

Figure 1 is a side view from the right hand side of a forage harvester 1 travelling in the direction indicated by the arrow. The forage harvester has a cab 8 which can be accessed by steps 9, 9a (shown in fig. 3 and 4) on either side of the harvester and a spout 2. In this figure, the spout 2 is stowed in the travelling position in which the spout is secured to face the rear of the forage harvester. The body of the harvester comprises a floor 3, left and right opposing side panels 4 and a roof walkway 5 shown more clearly in figures 5 and 6. Machine parts, such as the motor, gears and belt drive (shown in figures 3 and 4 only) are stored within the body of the harvester and accessed through the side panels 4 and from the roof walkway 5.

The roof walkway 5 (shown in figures 5 and 6) has a substantially horizontal surface and extends centrally over the harvester in a longitudinal direction. By longitudinal direction it is meant along an axis parallel to the direction of travel of the machine.. The walkway comprises a flat grid which is accessed by steps 6 from the cab platform 7, allowing persons to walk over the top of the harvester and access machine parts, machine components and the spout 2 for maintenance and cleaning purposes.

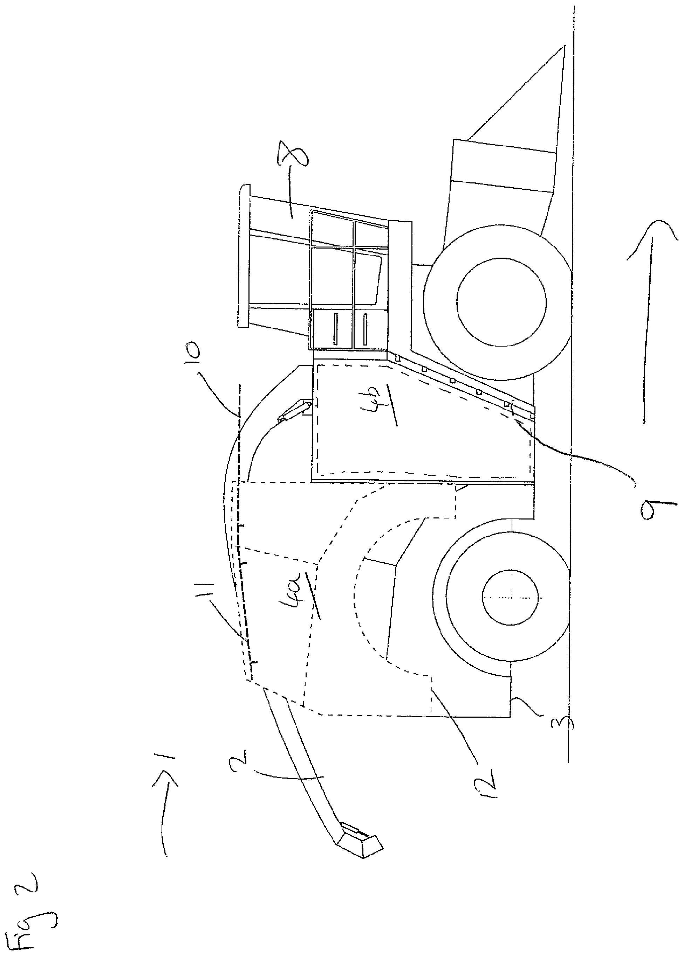

In figure 1 the right hand side of the body of the forage harvester 1 is covered by two side panels 4 shown in figure 1 in the closed position. The panels 4 (indicated by the dotted lines) are made from a material suitable for covering large areas such as a thin sheet metal, a glass-fibre reinforced plastic, or a long fibre injection moulding part. In the closed position the panels 4 extend in a substantially vertical plane from at least the walkway 5 down to the floor 3, providing the machine parts with side protection. One of the panels is fitted to the harvester by a four bar linkage mechanism (not shown) permitting the panel to be moved from the closed position to an open position in which the surface of the panel still lies in a vertical, or substantially vertical plane. Panel 4a may be made of one or more panel sections which are fitted to a panel frame and welded, or glued together to form a single panel surface. Panel 4a has an arch cut out for fitting around the rear wheel which can be seen in figure 2. In accordance with the invention, an opposing panel 4c (seen in figure 3) is fitted on the other side of the harvester opposite to panel 4a.

Since panel 4a moves in a substantially vertical plane between a closed and an open position, the machine parts can be accessed in a restricted space since panel 4a does not require much space to the side of the harvester to allow it to be opened.

The other panel 4b opens by pivoting about a vertical axis, like a door.

Figure 2 shows panel 4a in a partially open position in which the panel has been raised upwards giving access under the panel to the machine parts. Panel 4b remains in a closed position. Panel 4a remains in a vertical plane so that a portion of the panel protrudes over the roof walkway 5. The panel 4a thus provides a safety barrier along an edge of the walkway 5.

An upper edge 11 of panel 4a is provided with a hand rail 10 so that a person on the walkway 5 has a handrail for safety. The hand rail 10 is longer than the edge 11 of the panel 4a to provide a safety rail along the walkway above panel 4b which is not movable in an upwards direction. The walkway 5 along the length of the body of the harvester 1 is therefore provided with safety means.

Panel 4b can be opened fully so that panel 4a is raised to a height providing unobstructed access to the machine parts below the walkway. It also means that walkway 5 is provided with a safety barrier (approximately 1 metre high) around the edge of the walkway which greatly reduces the risk of an operator falling off the walkway.

Figure 3 shows the harvester 1 travelling in the opposite direction and therefore the left hand side of the harvester is shown. Steps 9a which lead to cab 8 are pivotable about a vertical access. The left hand side of the harvester is only provided with one panel, panel 4c,. In figure 3 side panel 4c is in a closed position. Side panel 4c is longer in length than panel 4a so that it covers all of the left hand side of the body of the harvester. A part of panel 4c therefore opposes panel 4a. Panel 4c also comprises one or more panel sections welded or glued together. Panel 4c is also provided with a handrail 10 (shown in fig. 4) along its upper edge and is moveable between open and closed positions like panel 4a so that it remains in a vertical plane.

Figure 4 shows panel 4c in a partially open position showing a portion of panel 4c protruding higher than walkway 5. When both opposing panels 4a and 4c are opened, they form a safety barrier along opposing edges of the walkway 5 which can be seen more clearly in figure 6.

Figure 5 is a view from the rear of the harvester showing rear panel 4d and opposing panels 4a and 4c in a closed position. As can be seen panels 4a and 4c have a generally straight lower portion which extend in a vertical plane between the walkway and floor when in the closed position and an upper portion which curves inwards towards the walkway 5. Handrail 10 extends over the edges of walkway 5. The handrail 10 is not visible from the side of the harvester since the handrail is spaced horizontally from the edges of panels 4a and 4c. In figure 5 only the panel frame 18 to which panel 4c is attached is shown.

Figure 6 is a view from the rear of the harvester showing opposing panels 4a and 4c in a fully open position. Together panels 4a and 4c provide a safety barrier with hand rail 10 along the edges of walkway 5. The panel opening mechanism 17 is shown and is described below.

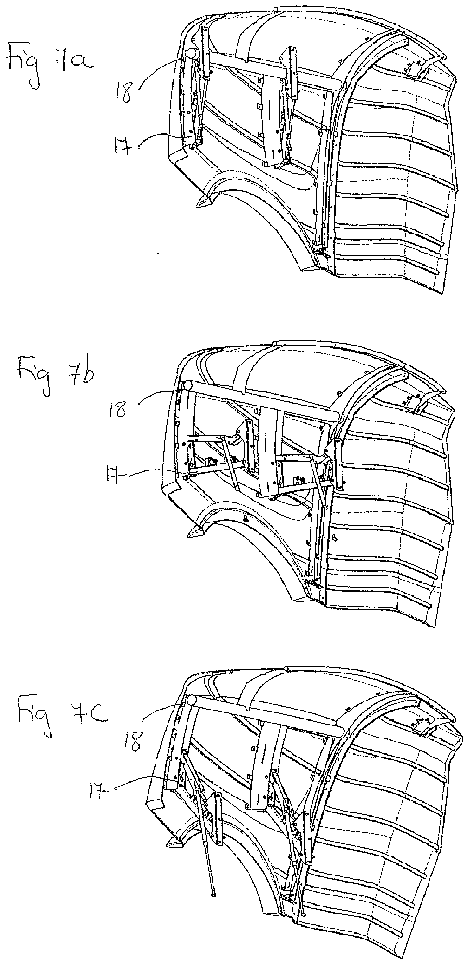

Figures 7a, 7b and 7c show panel 4a in closed, partially open and fully open positions respectively. A four bar linkage opening mechanism 17 is used to connect the panel frame 18 to the harvester 1.

In an alternative embodiment of the invention spout 2 is also provided with a handrail along its length. The spout 2 with handrail provide a safety barrier along the centre of the walkway 5. Therefore, even if only one of the side panels 4a is provided with a handrail 10 the walkway 5 is provided with opposing safety barriers to reduce the risk of falling.

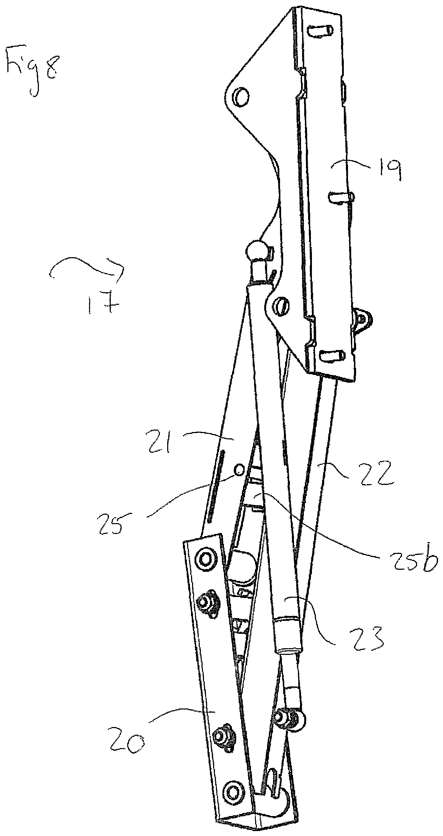

Figure 8 shows the four bar linkage opening mechanism 17 in the closed position. The four bar linkage comprises four parts: a first bracket 19 for mounting the mechanism to the harvester 1, a second bracket 20 for mounting the panels 4a, 4c (not shown) to the linkage, an upper link 21 and a lower link 22. Upper and lower links 21 and 22 are pivotally mounted at each end to brackets 19 and 20. Spring means 23, such as a gas spring connects upper link 21 to the harvester 1 to actuate the linkage mechanism 17. Each panel 4a, 4c is mounted to the harvester 1 by two linkage mechanisms 17.

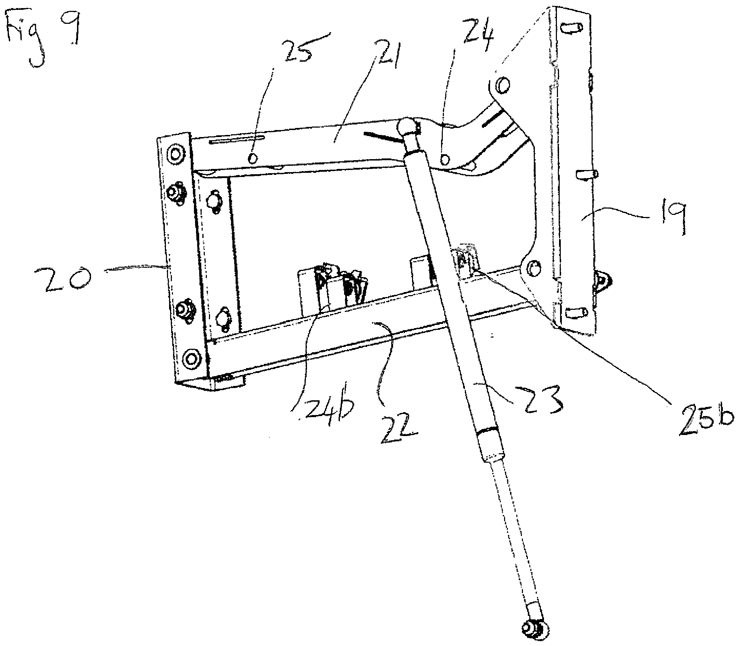

Figure 9 shows the mechanism 17 in a partially open position. To move from the closed position to the partially open position, spring means 23 is extended and as it extends, upper and lower links 21, 22 pivot about bracket 19 whilst bracket 20 pivots relative to upper and lower links so that the panel attachment surface of bracket 20 remains in a substantially vertical plane. This means that panel 4c and panel 4a attached to the bracket 20 also move in a substantially a vertical plane.

Two safety bolts 24, 25 are mounted to upper link 21. When in the closed position safety bolt 25 is secured into locking means 25b located on lower link 22. This prevents panels 4a, 4c from moving away from the harvester 1 when in the closed position. To move the panels into an open position it is necessary to unlock bolt 25 from locking means 25b.

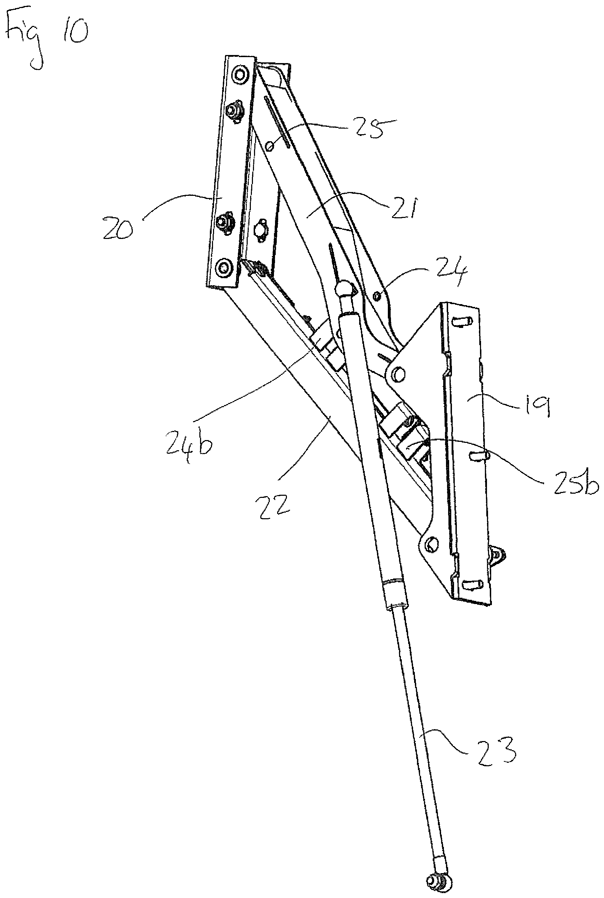

Figure 10 shows the four bar linkage mechanism 17 in a fully open position. Spring means 23 has been extended further and upper and lower links have pivoted further upwards about bracket 19. Bracket 20 has pivoted so that it remains in a substantially vertical plane. Safety bolt 24 is locked into locking means 24b on lower link 22 to prevent further movement of the panels 4a, 4c when in the open position. Locking means 24b and 25b are actuated simultaneously by cables, such as Bowden cables which are connected to a lever (not shown) and which can be activated by the operator.

Although two locking means and two bolts are provided on linkage 17 to secure the panels in open and closed positions, it is possible that an alternative linkage mechanism could be used requiring one or more locking means in combination with one or more locking bolts.

In an alternative embodiment of the invention, pneumatic or hydraulic cylinders are used to raise and lower the panels instead of spring means 23. Such cylinders could be pressurised and de-pressurised by a push button. Valve means provided on the cylinders can be used as locking means to secure the panels in the desired position.

In yet a further embodiment of the invention, the panels 4a and 4c may be provided with an opening mechanism which is operable by a remote control means.

The invention described herein has the advantage that the panels can be raised upwards above the harvester providing the operator with easy and unhindered access to the parts beneath the panels with the added advantage that the panels provide a safety barrier along the walkway.

## Claims

1. A self-propelled forage harvester (1) having a central, elevated walkway (5) extending in a longitudinal direction along the harvester (1) above machine parts situated below on a floor (3) of the harvester, **characterized in that** said harvester has at least two opposing exterior side panels (4), each of said side panels movable between a closed position in which each panel (4) extends in a substantially vertical plane between the walkway (5) and the floor (3) of the harvester providing protection to a side of the harvester, and an open position, wherein when in the open position each panel (4) is in a raised position that extends in a substantially vertical plane providing access underneath the panel to the machine parts and wherein at least a portion of each panel projects above the walkway (5) providing a safety barrier along two edges of the walkway.

2. A self-propelled forage harvester (1) as claimed in any preceding claim wherein at least one panel is provided with a hand rail (10).

3. A self-propelled forage harvester (1) as claimed in any preceding claim wherein in the closed position each of the at least two side panels (4) extend in a plane parallel to the vertical plane of the panel in the open position.

4. A self-propelled forage harvester (1) as claimed in any preceding claim wherein the at least two side panels (4) are maintained in substantially the same vertical plane, or a parallel vertical plane during movement between the open and closed positions.

5. A self-propelled forage harvester (1) as claimed in any preceding claim wherein the at least two side panels (4) are mounted to the machine by a four bar linkage mechanism 17.

6. A self-propelled forage harvester (1) as claimed in claim 5 wherein the four bar linkage mechanism 17 is actuated by a gas spring means 23.

7. A self-propelled forage harvester (1) as claimed in claim 5 wherein the four bar linkage mechanism (17) is actuated by a pneumatic, or hydraulic cylinder.

8. A self-propelled forage harvester (1) as claimed in any preceding claim wherein said at least two panels (4) are provided with locking means (25b) to secure said panels in both closed and opened positions.

9. A self-propelled forage harvester (1) as claimed in any preceding claim wherein said at least two panels (4) are opened and closed by remote control means.

10. A self-propelled forage harvester (1) according to any preceding claim, further comprising a cab (8), a cab platform (7) and steps (6), wherein the walkway (5) comprises a flat grid which can be accessed by the steps (6) from the cab platform (7).

## Patentansprüche

1. Selbstfahrender Feldhäcksler (1) mit einem mittigen, erhöhten Laufsteg (5), der sich in einer Längsrichtung entlang des Feldhäckslers (1) oberhalb von auf einem Boden (3) des Feldhäckslers angeordneten Maschinenteilen erstreckt, **dadurch gekennzeichnet, dass** der Feldhäcksler mindestens zwei einander gegenüberliegende äußere Seitenplatten (4) aufweist, wobei jede der Seitenplatten zwischen einer geschlossenen Position, in der sich jede Platte (4) in einer im Wesentlichen vertikalen Ebene zwischen dem Laufsteg (5) und dem Boden (3) des Feldhäckslers erstreckt und Schutz für eine Seite des Feldhäckslers bereitstellt, und einer offenen Position beweglich ist, wobei sich in der offenen Position jede Platte (4) in einer angehobenen Position befindet, die sich in einer im wesentlichen vertikalen Ebene erstreckt und unterhalb der Platte einen Zugang zu den Maschinenteilen bereitstellt, und wobei sich mindestens ein Teil jeder Platte über den Laufsteg (5) hinaus nach oben erstreckt und so eine Sicherheitsbarriere entlang von zwei Seiten des Laufstegs bereitstellt.

2. Selbstfahrender Feldhäcksler (1) nach einem der vorhergehenden Ansprüche, wobei mindestens eine Platte mit einem Handlauf (10) versehen ist.

3. Selbstfahrender Feldhäcksler (1) nach einem der vorhergehenden Ansprüche, wobei sich in der geschlossenen Position jede der mindestens zwei Seitenplatten (4) in einer Ebene erstreckt, die parallel zu der Vertikalebene der Platte in der offenen Position verläuft.

4. Selbstfahrender Feldhäcksler (1) nach einem der vorhergehenden Ansprüche, wobei die mindestens zwei Seitenplatten (4) während der Bewegung zwischen der offenen und der geschlossenen Position im Wesentlichen in derselben Vertikalebene oder einer parallelen Vertikalebene gehalten werden.

5. Selbstfahrender Feldhäcksler (1) nach einem der vorhergehenden Ansprüche, wobei die mindestens zwei Seitenplatten (4) über ein Viergelenkgetriebe (17) an der Maschine befestigt sind.

6. Selbstfahrender Feldhäcksler (1) nach Anspruch 5, wobei das Viergelenkgetriebe (17) durch ein Gasfedermittel (23) betätigt wird.

7. Selbstfahrender Feldhäcksler (1) nach Anspruch 5, wobei das Viergelenkgetriebe (17) durch einen pneumatischen oder hydraulischen Zylinder betätigt wird.

8. Selbstfahrender Feldhäcksler (1) nach einem der vorhergehenden Ansprüche, wobei die mindestens zwei Platten (4) mit Sperrmitteln (25b) versehen sind, um die Platten sowohl in der geschlossenen als auch der geöffneten Position zu sichern.

9. Selbstfahrender Feldhäcksler (1) nach einem der vorhergehenden Ansprüche, wobei die mindestens zwei Platten (4) durch Fernsteuermittel geöffnet und geschlossen werden.

10. Selbstfahrender Feldhäcksler (1) nach einem der vorhergehenden Ansprüche, weiterhin mit einer Kabine (8), einer Kabinenplattform (7) und Stufen (6), wobei der Laufsteg (5) ein flaches Gitter aufweist, das von der Kabinenplattform (7) über die Stufen (6) erreichbar ist.

## Revendications

1. Moissonneuse de fourrage automotrice (1) comportant une passerelle centrale supérieure (5) s'étendant suivant une direction longitudinale le long de la moissonneuse (1) au-dessus de parties de machine situées au-dessous, sur un plancher (3) de la moissonneuse, **caractérisée en ce que** ladite moissonneuse comporte au moins deux panneaux latéraux extérieurs (4) opposés, chacun desdits panneaux latéraux pouvant être déplacé entre une position fermée dans laquelle chaque panneau (4) s'étend dans un plan sensiblement vertical entre la passerelle (5) et le plancher (3) de la moissonneuse assurant une protection sur un côté de la moissonneuse, et une position ouverte, dans laquelle, lorsqu'il est dans la position ouverte, chaque panneau (4) est dans une position soulevée qui s'étend dans un plan sensiblement vertical assurant l'accès par le dessous du panneau aux composants de machine et dans laquelle au moins une partie de chaque panneau s'étend au-dessus de la passerelle (5) formant une barrière de sécurité le long des deux bords de la passerelle.

2. Moissonneuse de fourrage automotrice (1) selon l'une quelconque des revendications précédentes dans laquelle au moins un panneau est équipé d'une main courante (10).

3. Moissonneuse de fourrage automotrice (1) selon l'une quelconque des revendications précédentes
dans laquelle dans la position fermée chacun des au moins deux panneaux latéraux (4) s'étend dans un plan parallèle au plan vertical du panneau dans la position ouverte.

4. Moissonneuse de fourrage automotrice (1) selon l'une quelconque des revendications précédentes
dans laquelle les au moins deux panneaux latéraux (4) sont maintenus sensiblement dans le même plan vertical, ou dans un plan vertical parallèle, au cours du mouvement entre les positions ouverte et fermée.

5. Moissonneuse de fourrage automotrice (1) selon l'une quelconque des revendications précédentes dans laquelle les au moins deux panneaux latéraux (4) sont montés sur la machine par un mécanisme de liaison à quatre barres (17).

6. Moissonneuse de fourrage automotrice (1) selon la revendication 5 dans laquelle le mécanisme de liaison à quatre barres (17) est activé par un moyen formant ressort à gaz (23).

7. Moissonneuse de fourrage automotrice (1) selon la revendication 5 dans laquelle le mécanisme de liaison à quatre barres (17) est activé par un vérin pneumatique, ou hydraulique.

8. Moissonneuse de fourrage automotrice (1) selon l'une quelconque des revendications précédentes dans laquelle lesdits au moins deux panneaux (4) sont équipés de moyens de verrouillage (25b) destinés à fixer lesdits panneaux à la fois dans les positions fermée et ouverte.

9. Moissonneuse de fourrage automotrice (1) selon l'une quelconque des revendications précédentes dans laquelle lesdits au moins deux panneaux (4) sont ouverts et fermés par des moyens de commande à distance.

10. Moissonneuse de fourrage automotrice (1) selon l'une quelconque des revendications précédentes, comprenant, en outre, une cabine (8), une plate-forme de cabine (7) et des marches (6), dans laquelle la passerelle (5) comprend une grille plate dont l'accès peut être assuré par les marches (6) à partir de la plate-forme de cabine (7).
